(19) Europäisches Patentamt
European Patent Office
Office européen des brevets

(11) EP 0 667 878 B1

(12) **EUROPÄISCHE PATENTSCHRIFT**

(45) Veröffentlichungstag und Bekanntmachung des Hinweises auf die Patenterteilung:
**02.01.1997 Patentblatt 1997/01**

(21) Anmeldenummer: **93924547.8**

(22) Anmeldetag: **29.10.1993**

(51) Int Cl.⁶: **C08G 65/34**, C11D 3/37, C08G 81/00

(86) Internationale Anmeldenummer:
**PCT/EP93/03018**

(87) Internationale Veröffentlichungsnummer:
**WO 94/10225 (11.05.1994 Gazette 1994/11)**

(54) **BLOCKCOPOLYACETALE, VERFAHREN ZU IHRER HERSTELLUNG UND IHRE VERWENDUNG IN WASCH- UND REINIGUNGSMITTELN**

BLOCK COPOLYACETALS, PROCESS FOR PRODUCING THE SAME AND THEIR USE IN WASHING AND CLEANING AGENTS

COPOLYACETALS SEQUENCES, LEUR PROCEDE DE PREPARATION ET LEUR UTILISATION DANS DES DETERGENTS ET DES NETTOYANTS

(84) Benannte Vertragsstaaten:
**AT BE CH DE ES FR GB IT LI NL SE**

(30) Priorität: **05.11.1992 DE 4237337**

(43) Veröffentlichungstag der Anmeldung:
**23.08.1995 Patentblatt 1995/34**

(73) Patentinhaber: **BASF Aktiengesellschaft**
**67063 Ludwigshafen (DE)**

(72) Erfinder:
- **KRONER, Matthias**
  **D-67304 Eisenberg (DE)**
- **SCHORNICK, Gunnar**
  **D-67271 Neuleiningen (DE)**
- **BAUR, Richard**
  **D-67112 Mutterstadt (DE)**
- **SCHWENDEMANN, Volker**
  **D-67434 Neustadt (DE)**
- **HARTMANN, Heinrich**
  **D-67117 Limburgerhof (DE)**

(56) Entgegenhaltungen:
**WO-A-91/06622** **FR-A- 2 204 683**
**US-A- 4 713 441**

- **DATABASE WPI Derwent Publications Ltd., London, GB; AN 91-366502 & JP,A,3 247 614 (ASAHI CHEMICAL IND KK) 5. November 1991**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 667 878 B1

Printed by Jouve, 75001 PARIS (FR)

## Beschreibung

Die Erfindung betrifft Blockcopolyacetale, Verfahren zu ihrer Herstellung und ihrer Verwendung in Wasch- und Reinigungsmitteln.

Aus Journal of Polymer Science: Polymer Letters Edition, Vol. 18, 293-297 (1980) ist die Herstellung von Polyacetalen durch Säure katalysierte Anlagerung von Polyolen an Divinylether bekannt. So erhält man beispielsweise durch Polyaddition von trans-1,4-Cyclohexandimethanol an Butandioldivinylether unter der katalytischen Wirkung von p-Toluolsulfonsäure ein Polyacetal mit einem Molekulargewicht von 200 000. Die beschriebenen Polyacetale werden in der Medizin zur kontrollierten Freisetzung von Wirkstoffen verwendet.

Aus der nicht vorveröffentlichten DE-A-4142130 ist die Verwendung von Polyacetalen, die durch kationisch initiierte Polyaddition von Divinylethern und Dihydroxyverbindungen sowie gegebenenfalls Monohydroxyverbindungen erhältlich sind, als Zusatz zu phosphatarmen und phosphatfreien Wasch- und Reinigungsmitteln bekannt. Außerdem sind daraus Polyacetale bekannt, die durch kationisch initiierte Polyaddition von Divinylethern und Dihydroxyverbindungen und anschließende Addition von Monohydroxyverbindungen an 5 bis 95% der Vinylethergruppen im Polyacetal erhältlich sind, so daß die entstehenden Polyacetale Vinylethergruppen aufweisen.

Der vorliegenden Erfindung liegt die Aufgabe zugrunde, neue Stoffe zur Verfügung zu stellen, die in Wasch- und Reinigungsmitteln einsetzbar sind.

Die Aufgabe wird erfindungsgemäß gelöst mit den Polyacetalen, die erhältlich sind durch kationisch initiierte Polyaddition von

(A) Acetaldehydacetaleinheiten enthaltenden Polyacetalen mit mindestens 2 OH-Gruppen im Molekül und

(B) Acetaldehydacetaleinheiten enthaltenden Polyacetalen mit mindestens 2 Vinylethergruppen im Molekül,

wobei das Molverhältnis der OH-Gruppen in den Polyacetalen (A) zu den Vinylethergruppen in den Polyacetalen (B) 2:1 bis 1:2 beträgt.

Die Aufgabe wird außerdem gelöst mit einem Verfahren zur Herstellung von Blockcopolyacetalen, wenn man

(A) Acetaldehydacetaleinheiten enthaltende Polyacetale mit mindestens 2 OH-Gruppen im Molekül und

(B) Acetaldehydacetaleinheiten enthaltende Polyacetale mit mindestens 2 Vinylethergruppen im Molekül

im Molverhältnis der OH-Gruppen in den Polyacetalen (A) zu den Vinylethergruppen in den Polyacetalen (B) von 2:1 bis 1:2 einer kationisch initiierten Polymerisation unterwirft.

Die so erhältlichen Blockcopolyacetale werden als Zusatz zu phosphatarmen und phosphatfreien Wasch- und Reinigungsmitteln und als schaumarme Tenside in Geschirrspülmitteln verwendet.

Acetaldehydacetaleinheiten enthaltende Polyacetale der Gruppe (A) mit mindestens 2 OH-Gruppen im Molekül werden beispielsweise dadurch hergestellt, daß man (a) Divinylether und (b) Dihydroxyverbindungen im Molverhältnis 1:2 bis 1:1,0001 einer kationisch initiierten Polyaddition unterwirft. Bei dieser kationisch initiierten Polyaddition können gegebenenfalls Monohydroxyverbindungen als weitere Gruppe (c) addiert werden.

Als Monomere der Gruppe (a) kommen sämtliche Divinylether in Betracht, z.B. Divinylether, Furan, Ethylenglykoldivinylether, Diethylenglykoldivinylether, Triethylenglykoldivinylether, Tetraethylenglykoldivinylether, Propylenglykoldivinylether, 1,4-Butandioldivinylether, 1,6-Hexandioldivinylether, Bis-(hydroxymethyl) cyclohexandimethanoldivinylether, Polytetrahydrofurandivinylether mit Molekulargewichten von 250 bis 4 500, Polyethylenglykoldivinylether mit Molekulargewichten des Polyethylenglykols bis zu 20 000, Polypropylenglykoldivinylether mit Molekulargewichten bis zu 10 000, sowie Divinylether von Copolymerisaten aus Ethylenoxid und Propylenoxid mit Molekulargewichten bis zu 10 000 sowie Divinylether von Diolen, die durch Wasserabspaltung von Polyolen erhältlich sind, bspw. Dianhydrosorbitdivinylether, Dianhydromannit-divinylether oder Dianhydroerythrit-divinylether. Sämtliche Dihydroxyverbindungen der Gruppe b können in Form ihrer Divinylether als Monomere der Gruppe a eingesetzt werden.

Als Monomere der Gruppe (b) verwendet man Dihydroxyverbindungen. Prinzipiell können alle Verbindungen verwendet werden, die 2 OH-Gruppen aufweisen, z.B. Alkylenglykole, wie Ethylenglykol, Diethylenglykol, Triethylenglykol, Tetraethylenglykol, Polyethylenglykole bis zu Molekulargewichten von 10 000, Propylenglykol, Dipropylenglykol, Polypropylenglykole mit Molekulargewichten bis zu 10 000, Copolymerisate aus Ethylenoxid und Propylenoxid und gegebenenfalls Butylenoxid mit Molekulargewichten bis zu 10 000, Polytetrahydrofuran mit Molekulargewichten bis zu 10 000, 1,2-Butandiol, 1,3-Butandiol, 1,4-Butandiol, 1,2-Pentandiol, Neopentylglykol, 1,5-Pentandiol, 1,2-Hexandiol, 1,3-Hexandiol, 1,4-Hexandiol, 1,5-Hexandiol, 1,6-Hexandiol, 1,7-Heptandiol, 1,8-Octandiol, 2,5-Dimethyl-2,5-hexandiol, 1,4-Bis-(hydroxymethyl)cyclohexan, Brenzkatechin, Resorcin und Hydrochinon. Außer den Alkylenglykolen und Phenolen können auch solche Dihydroxyverbindungen als Monomer der Gruppe (b) eingesetzt werden, die zusätzlich

weitere funktionelle Gruppen tragen, z.B. Ester-, Amid-, Nitril-, Ether-, Acetal-, Imidoester-, Keton-, Imid- und Thioethergruppen sowie CC-Doppel- oder CC-Drei-fachbindungen. Beispiele für geeignete Verbindungen dieser Art sind Weinsäuredimethylester, Weinsäurediethylester, 2,2-Bis (hydroxymethyl)propionsäuremethylester, Hydroxypivalinsäureneopentylglykolester, 2-Buten-1,4-diol und 3-Hexin-2,5-diol, Terephthalsäure-bis(ethylenglykolester), 1-Phenylethylenglykol, Octadecandiol aus hydriertem Rizinusöl. Beispiele für weitere geeignete Monomere der Gruppe (b) sind Dihydroxycarbonsäureester, die aus natürlichen Fetten und Ölen isoliert werden können oder mittels enzymatischen, bakteriellen oder chemischen Reaktionen herstellbar sind beispielsweise aus Rapsöl, Leinöl oder Rizinusöl. Beispiele für solche Verbindungen sind Dihydroxyfettsäuren wie 10,12-Dihydroxystearinsäure, 9,10-Dihydroxystearinsäure, 9,12-Dihydroxy-10-octadecensäure, 9,12-Dihydroxy-9-oxo-10-octadecensäure, 10,13-Dihydroxy-11-octadecensäure und 12,13-Dihydroxy-9-oxo-10-octadecensäure. Dihydroxyfettsäureester sind außerdem durch Hydroxylieren und Oxidieren von Fettsäuren natürlicher Herkunft erhältlich, beispielsweise aus Ricinolsäure, Linolsäure, Ölsäure, Linolensäure, Elaidinsäure, Palmitoleinsäure, Myristoleinsäure, Palmitinsäure und Stearinsäure. Durch Wasserabspaltung von Polyolen entstandene Diole, wie beispielsweise Dianhydrosorbit, Dianhydromannit, Dianhydroerythrit sind ebenfalls geeignet. Bevorzugt eingesetzte Monomere der Gruppe (b) sind Butandiol, Hexandiol, Diethylenglykol, Polyethylenglykole bis Molmassen bis 20.000, Triethylenglykol, Weinsäuredimethylester und Weinsäurediethylester.

Geeignete Monohydroxyverbindungen der Gruppe (c), die gegebenenfalls bei der kationisch initiierten Polyaddition mitverwendet werden, sind aliphatische und aromatische Verbindungen, die jeweils eine Hydroxylgruppe aufweisen. Die üblicherweise in Betracht kommenden Hydroxylgruppen enthaltenden aliphatischen und aromatischen Verbindungen enthalten bis zu 30 Kohlenstoffatome im Molekül. Bei diesen Stoffen handelt es sich in erster Linie um Alkohole und Phenole. Sie können jedoch auch noch weitere funktionelle Gruppen enthalten, beispielsweise Ester-, Amid-, Nitril-, Ether, Acetal-, Aminoester-, Imid- und Thioethergruppen sowie CC-Doppelbindungen und CC-Dreifachbindungen enthalten. Beispiele für in Betracht kommende Verbindungen sind $C_1$- bis $C_{30}$-einwertige Alkohole, wie Methanol, Ethanol, n-Propanol, Isopropanol, n-Butanol, Isobutanol, tert.-Butanol, Pentanole, 2-Methylbutanol, 3-Methylbutanol, tert.-Amylalkohol, 3-Methyl-3-pentanol, Cyclohexanol, n-Hexanol, n-Octanol, Isooctanol, Decanol, Dodecanol, Stearylalkohol und Palmitylalkohol, sowie Oxoalkohole, die durch Anlagerung von Kohlenmonoxid und Wasserstoff an Olefine nach dem Oxoverfahren erhältlich sind, Allylalkohol, Phenol, o-, m- und p-Kresol, Alkylphenole, Benzylalkohol, Propargylalkohol, Butinol, 3-Methyl-3-buten-1-ol, 3-Methyl-2-buten-1-ol, 2-Methyl-3-buten-2-ol, 2-Methyl-3-butin-2-ol und 1-Ethinylcyclohexanol.

Außerdem kommen als Monomere der Gruppe (c) Umsetzungsprodukte von Alkoholen und Phenolen mit 1 bis 100 mol Alkylenoxiden in Betracht. Geeignete Alkylenoxide sind beispielsweise Ethylenoxid, Propylenoxid und Butylenoxide. Geeignete Alkoxylierungsprodukte sind beispielsweise Ethylenglykolmonomethylether, Ethylenglykolmonoethylether, Ethylenglykolmonobutylether, Propylenglykolmonobutylether, 1,2-Butylenglykolmonomethylether, 2-(4-Methoxyphenyl) -ethanol, Diethylenglykolmonomethylether, Diethylenglykolmonoethylether, Diethylenglykolmonobutylether, Umsetzungsprodukte von 1 mol Methanol mit 3,9 oder 25 mol Ethylenoxid, Umsetzungsprodukte eines Oxoalkohols mit 3 bis 25 mol Ethylenoxid. Weitere geeignete monofunktionelle Alkohole sind beispielsweise Ethylenchlorhydrin, Propylenchlorhydrin, 6-Chlorhexanol, 8-Chloroctanol, Glykolsäuremethylester, Glykolsäureethylester, Milchsäuremethylester, Milchsäureethylester, Milchsäureisopropylether, Milchsäure-n-butylester, Milchsäure-isobutylester, Mandelsäuremethylester, Mandelsäureethylester, Hydroxipropionnitril, Hydroxibuttersäuremethylester, Hydroxybuttersäureethylester, Hydroxyvaleriansäuremethylester, Hydroxyvaleriansäureethylester, Hydroxyvaleriansäureisopropylester, Hydroxyisovaleriansäuremethylester, Hydroxyisovaleriansäureethylester, Hydroxyisobuttersäuremethylester, Hydroxyisobuttersäureethylester, Hydroxypivalinsäuremethylester, Hydroxypivalinsäureethylester, Benzilsäureethylester, Mandelsäurenitril, Hydroxymalonsäurediethylester, Hydroxymethylmaleinsäurediethylester, Hydroxymethylmalonsäurediethylester, Äpfelsäurediethylester, Zitronensäuretriethylester, Hydroxycrotonsäureethylester, Äpfelsäuredimethylester, Zitronensäuretrimethylester, Zitronensäuretri-n-propylester, Hydroxycrotonsäuremethylester, 3-Hydroxy-4-hexensäuremethylester, 2-Hydroxy-3,3-Dimethylbutyrolacton, Hydroxyaceton, Glykolaldehyd, Vanillin, Eugenol, Salicylaldehyd und Acetoin.

Außerdem eignen sich Hydroxyfettsäureester, die bakteriell, enzymatisch oder durch chemische Hydroxylierung von Ölen oder Fetten natürlichen Ursprungs herstellbar sind, beispielsweise auf Basis von Linolsäure, Linolensäure, Ölsäure, Elaidinsäure, Ricinolsäure, Palmitinsäure und Stearinsäure. Hieraus erhält man beispielsweise 10-Hydroxy-12-octadecensäuremethylester, 10-Hydroxy-12,15-octadecadiensäuremethylester, 12-Hydroxyölsäuremethylester, Ricinolsäuremethylester, 10-Hydroxyoctadecansäuremethylester, 10-Hydroxystearinsäuremethylester, Hydroxypalmitinsäuremethylester, 10-Hydroxyhexadecansäuremethylester, 13-Hydroxy12,13-epoxy-10-octadecansäuremethylester, 9-Hydroxy-10-oxo-12-octadecensäuremethylester und 13-Hydroxypalmitinsäuremethylester.

Die Monomeren (a), (b) und gegebenenfalls (c) werden kationisch polymerisiert. Hierbei addiert die OH-Gruppe eines Monomeren der Gruppe (b) an eine Vinylethergruppe des Monomers der Gruppe (a) unter Bildung eines Acetaldehydacetals der Struktur

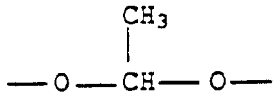

Bei dieser Polyaddition erhält man eine polymere Hauptkette, in der die Monomereinheiten über Acetaldehydacetaleinheiten miteinander verknüpft sind. Die kationische Copolymerisation der Monomeren der Gruppen (a), (b) und gegebenenfalls (c) kann mit Eilfe von allen organischen oder anorganischen sauer reagierenden Stoffen initiiert werden. Geeignete kationische Initiatoren sind beispielsweise Oxalsäure, Weinsäure, Adipinsäure, Bernsteinsäure, Bernsteinsäureanhydrid, Zitronensäure, Ameisensäure, Essigsäure, Propionsäure, Äpfelsäure, ein- oder mehrfach halogenierte Carbonsäuren, wie Trifluoressigsäure oder Trichloressigsäure, Chlorwasserstoff, Bromwasserstoff, Jodwasserstoff, Schwefelsäure, Phosphorsäure, Benzolsulfonsäure, p-Toluolsulfonsäure, Borsäure, Ascorbinsäure, saures Aluminiumoxid, Aluminiumsulfat, Kaliumaluminiumsulfat, Eisen-II-sulfat, Eisen-III-sulfat, Aluminiumoxid, Titanylsulfat, Eisen-III-chlorid, Bortrifluorid, Bortrichlorid, Bortribromid, Jod, Ionenaustauscher in der Säureform und mit Säure beladene inerte feste Stoffe. Die Initiatoren für die kationische Polymerisation werden üblicherweise in Mengen von 0,001 bis 20, vorzugsweise 0,01 bis 1 Gew.-%, bezogen auf die Monomeren der Gruppen (a) und (b), eingesetzt. Die Copolymerisation verläuft stark exotherm. Die Reaktionstemperaturen betragen je nach Aktivität des eingesetzten Initiators zwischen -20 und 250, vorzugsweise 0 bis 200°C.

Vorzugsweise werden Oxalsäure, Weinsäure und Zitronensäure als Polymerisationsinitiatoren verwendet.

Beispielsweise reagieren die Monomeren (a) und (b) bei Anwesenheit von 0,1 bis 5 Gew.-% p-Toluolsulfonsäure bereits bei 40°C in einer exothermen Reaktion innerhalb von 10 min. vollständig ab. Verwendet man zur Initiierung der Copolymerisation 0,2 Gew.-% Oxalsäure, so ist die Copolymerisation bei 90°C innerhalb 1 Stunde und bei 130°C bereits innerhalb von 10 Minuten beendet. Es ist aber auch möglich, die mittels Oxalsäure initiierte Copolymerisation bei 200°C innerhalb weniger Sekunden ablaufen zu lassen. Allgemein wählt man bei der Initiierung mittels schwächerer Säuren (Weinsäure, Oxalsäure oder Zitronensäure) Temperaturen oberhalb von 70°C, während man bei Verwendung von starken Säuren, wie Toluolsulfonsäure, die Reaktionstemperaturen unter 70°C hält. Bei der Copolymerisation entstehen meistens farblose und bei Verwendung von Oxalsäure und Weinsäure als Katalysator thermische sehr beständige Öle oder Harze.

Die kationische Polymerisation der Monomeren (a), (b) und gegebenenfalls (c) wird bevorzugt in Abwesenheit eines Lösemittels durchgeführt. Es ist aber auch möglich, in Gegenwart von inerten Verdünnungsmitteln zu arbeiten. Dies kann in bestimmten Fällen von Vorteil sein, weil die Reaktionswärme dann mit Hilfe des verdampfenden Verdünnungsmittels leicht abgeführt werden kann. Bei Verwendung einer starken Säure als Initiator benutzt man bevorzugt eine Lösung des Initiators in einem Verdünnungsmittel, beispielsweise eine 0,005 bis 10 gew.-%ige, besonders bevorzugt eine 0,01 bis 5 gew.-%ige Lösung von p-Toluolsulfonsäure in Toluol.

Als Verdünnungsmittel bei der kationischen Copolymerisation kommen alle Verdünnungsmittel in Betracht, die keine funktionellen Gruppen tragen, die mit Vinylethern reagieren können. Vorzugsweise werden solche Verdünnungsmittel verwendet, die leicht in wasserfreier Form erhältlich und nicht hygroskopisch sind. Beispiele für geeignete Verdünnungsmittel sind Essigsäureethylester, Diethylenglykoldiethylether, Ethoxyethylacetat, Butoxyethylacetat, aliphatische Kohlenwasserstoffe, wie Pentan, Hexan Cyclohexan, n-Heptan, n-Octan und Isooctan sowie aromatische Kohlenwasserstoffe, wie Toluol, Xylol, Mesitylen, Tetralin und Anisol. Geeignete Lösungsmittel sind ferner Tetrahydrofuran, Dioxan und Decalin, Aceton, Ethylmethylketon und Cyclohexanon.

Die Copolymerisation kann beispielsweise als Eintopfreaktion durchgeführt werden. Hierzu kann man die Monomeren der Gruppen (a) und (b) und gegebenenfalls (c) in einem Reakionsgefäß unter Ausschluß von Luftfeuchtigkeit mischen, mit Initiator versetzen und auf die erforderliche Reaktionstemperatur erwärmen. In einer bevorzugten Ausführungsform legt man die gesamte Initiatormenge im Reaktionsgefäß zusammen mit 10 % der zu polymerisierenden Monomermischung der Komponenten (a), (b) und gegebenenfalls (c) bei 20°C vor und startet die Polymerisationsreaktion vorzugsweise unter Inertgasatmosphäre durch Erhitzen der im Reaktionsgefäß vorgelegten Komponenten. Hierbei wird die Mischung gerührt und auch während der folgenden Copolymerisation. Sobald die Polymerisation in Gang gekommen ist, gibt man die restliche Monomermischung der Verbindungen der Komponenten (a), (b) und (c) kontinuierlich oder absatzweise zur Vorlage in dem Maße zu, daß die Polymerisationswärme sicher abgeführt werden kann. Wenn man Oxalsäure, Weinsäure oder Zitronensäure als Initiator einsetzt, benötigt man zum Start der Copolymerisation der Monomeren (a), (b) und gegebenenfalls (c) Temperaturen von etwa 70 bis etwa 160°C. Die Säuren lösen sich dann in der Monomermischung zu einer homogenen Lösung und die Polymerisation beginnt.

Bei Initiatoren, die sich in der Monomermischung nicht lösen, wird die heterogene Reaktionsmischung auf eine Temperatur in dem Bereich von 100 bis 250°C erwärmt, bis die Polymerisation startet.

Nach der Copolymerisation wird der Initiator entweder abgetrennt oder desaktiviert. Eine Desaktivierung des Katalysators empfiehlt sich deshalb, weil die Copolymerisate in Gegenwart von sauer reagierenden Stoffen und Wasser oder von anderen protischen Lösemitteln einer Hydrolyse unter Molgewichtsabbau unterliegen. Zur Desaktivierung des Initiators versetzt man das Reaktionsgemisch nach Abschluß der Copolymerisation und gegebenenfalls nach einem Abkühlen der Reaktionsmischung mit Alkalien, bevorzugt Natriumhydrogencarbonaz, Natronlauge, Kalilauge, Natriumcarbonat, Kaliumcarbonat, Ammoniumcarbonat, Aminen, wie Ammoniak, Methylamin, Dimethylamin, Trimethylamin, Ethylamin, Diethylamin, Dibutylamin, Tributylamin, Ethanolamin, Diethanolamin, Triethanolamin, Morpholin oder Salzen aus starken Basen und schwachen Säuren, wie Natriumacetat, Natriumformiat oder Kaliumhydrogencarbonat. Zur Desaktivierung der sauren Initiatoren eignet sich außerdem Calciumoxid, Calciumhydroxid, basisches Aluminiumoxid sowie basischer Ionenaustauscher. Unlösliche Initiatoren können leicht durch Abfiltrieren entfernt werden.

Bei der Kondensation der oben angegebenen Verbindungen der Gruppen (a) und (b) im Molverhältnis 1:2 bis 1: 1,0001, d.h. bei einem molaren Überschuß der Verbindungen der Komponenten (b) entstehen Acetaldehydacetaleinheiten enthaltende Polyacetale mit mindestens 2 OH-Gruppen im Molekül. Wenn man dagegen die oben beschriebenen Verbindungen der Komponenten (a) und (b) im molaren Verhältnis 2:1 bis 1,0001 : 1 setzt, entstehen Acetaldehydacetaleinheiten enthaltende Polyacetale mit mindestens 2 Vinylethergruppen im Molekül. Bei dieser Gruppe von Verbindungen handelt es sich um die Polyacetale der Gruppe (B). Die Polyacetale der Gruppen (A) und (B) haben vorzugsweise K-Werte von 10 bis 100 (bestimmt nach H. Fikentscher in 1-%iger Lösung in Tetrahydrofuran bei 25°C).

Die erfindungsgemäßen Blockcopolyacetale werden dadurch hergestellt, daß man

(A) Acetaldehydacetaleinheiten enthaltende Polyacetale mit mindestens 2 OH-Gruppen im Molekül und

(B) Acetaldehydacetaleinheiten enthaltende Polyacetale mit mindestens 2 Vinylethergruppen im Molekül

im Molverhältnis der OH-Gruppen in den Polyacetalen (A) zu den Vinylethergruppen in den Polyacetalen (B) von 2:1 bis 1:2 einer kationisch initiierten Polyaddition unterwirft. Hierfür benötigt man die gleichen Initiatoren, die oben für die Polyaddition der Verbindungen (a) mit den Verbindungen (b) beschrieben sind. Ebenso sind die übrigen Verfahrensmaßnahmen, die oben zur Herstellung der Acetaldehydacetaleinheiten enthaltenden Polyacetale der Gruppen (A) und (B) angegeben sind, auch für die Umsetzung oder Komponenten (A) und (B) üblich, d.h. die Umsetzung wird bei höheren Temperaturen und vorzugsweise in Abwesenheit von Lösemitteln durchgeführt.

Die Umsetzung der Polyacetale (A) mit den Polyacetalen (B) kann beispielsweise folgendermaßen schematisch veranschaulicht werden:

$$11\ \mathrm{HO{-}A{-}OH} \ + \ 10\ \mathrm{H_2C{=}CH{-}O{-}B{-}O{-}CH{=}CH_2} \longrightarrow$$

$$\mathrm{HO{-}(A{-}O{-}\overset{\overset{CH_3}{|}}{CH}{-}O{-}B)_{10}{-}O{-}A{-}OH.}$$

Das Verhältnis der OH-Gruppen in den Polyacetalen (A) zu den Vinylethergruppen in den Polyacetalen (B) beträgt 2:1 bis 1:2. Je nähedieses Verhältnis dem Zahlenwert 1 kommt, um so höher ist das Molekulargewicht der entstehenden Blockcopolyacetale. Liegt das Verhältnis außerhalb des angegebenen Bereichs, so bleiben die im Überschuß vorhandenden Komponenten (A) bzw. (B) in praktisch unveränderter Form im Reaktionsgemisch. Der Polymerisationsgrad für die Blockcopolymerisation kann beispielsweise mit Hilfe folgender Formel berechnet werden:

$$P_{Block} = \frac{(A) + (B)}{(A) - (B)}$$

Hierin bedeutet

(A) Mole an Polyacetal der Gruppe A,
(B) Mole an Polyacetal der Gruppe B und
$P_{Block}$ der Polymerisationsgrad der Blockcopolymerisate. Er gibt an, wieviele Blöcke A und B in den Blockcopolymerisaten enthalten sind.

Durch die Wahl der Polyacetale (A) und (B) können hydrophile und hydrophobe Blöcke aufgebaut werden. Man kann hierbei sowohl hydrophile als auch hydrophobe Blockcopolyacetale mit jeweils endständigen OH-Gruppen als

auch hydrophile oder hydrophobe Blockcopolymerisate mit jeweils endständigen Vinylethergruppen herstellen. Zur Veranschaulichung dieses Syntheseprinzips werden beispielhaft folgende Blockcopolyacetale beschrieben:

(1) Man stellt ein hydrophiles Polyacetal der Gruppe (A) her, indem man 8 Mol-Triethylenglykol und 7 Mol-Triethylenglykoldivinylether einer kationischen initiitierten Polyaddition unterwirft. Man erhält Acetaldehydacetaleinheiten enthaltende Polyacetale, die durchschnittlich 15 Monomereinheiten und an den Kettenenden jeweils eine OH-Gruppe tragen.

Ein hydrophobes Polyacetal der Gruppe B kann beispielsweise dadurch hergestellt werden, daß man 4 mol 1,6-Hexandiol und 5 mol 1,4-Butandioldivinylether einer kationisch initiierten Copolymerisation unterwirft. Man erhält auf diese Weise Acetaldehydacetaleinheiten enthaltende Polyacetale der Gruppe (B) mit durchschnittlichen 9 Monomerbausteinen und 2 Vinyletherendgruppen.

Werden die beiden oben beschriebenen Polyacetale (A) und (B) miteinander zur Polyaddition gebracht, so entstehen Blockcopolyacetale, die abwechselnd aus hydrophilen und aus hydrophoben Blöcken aufgebaut sind.

(2) Man stellt ein hydrophobes Polyacetal (A) dadurch her, daß man 11 mol 1,4-Butandiol und 10 mol 1,4-Butandiolvinylether der kationisch initiierten Polyaddition unterwirft. Man erhält ein hydrophobes Polyacetal (A), das aus 21 Monomereinheiten besteht, die jeweils über Acetaldehydacetaleinheiten verbunden sind und OH-Endgruppen aufweisen.

Man stellt ein hydrophiles Polyacetal (B) her, indem man 12 mol eines Polyethylenglykols mit einem mittleren Molekulargewicht von 300 und 13 mol Triethylenglykol-divinylether der kationisch initiierten Polyaddition unterwirft. Das so erhältliche hydrophile Polyacetal (B) besteht durchschnittlich aus 25 Monomereinheiten, die über Acetaldehydacetaleinheiten miteinander verbunden sind und besitzt Vinyletherendgruppen. Durch Polyaddition des hydrophoben Polyacetal (A) mit dem hydrophilen Polyacetal (B) werden Blockcopolyacetale erzeugt, die Tensideigenschaften besitzen.

(3) Durch Umsetzung von 1 mol 1,6-Hexandioldivinylether und 2 mol Bis(Hydroxymethyl)cyclohexan wird ein hydrophobes Polyacetal A mit 3 Monomereinheiten hergestellt, die über Acetaldehydacetaleinheiten verbunden sind. Das Polyacetal hat insgesamt 2 OH-Endgruppen.

Man stellt ein hydrophiles Polyacetal B her, indem man 19 Mol Polyethylenglykol eines mittleren Molekulargewichts von 600 und 20 mol Tetraethylenglykoldivinylether der kationisch initiierten Polyaddition unterwirft. Man erhält ein hydrophiles Polyacetal (B), das durchschnittlich aus 39 Monomereinheiten besteht, die über Acetaldehydacetaleinheiten verbunden sind und an den Kettenenden jeweils Vinylethergruppen besitzen.

Durch Polyaddition des hydrophoben Polyacetals (A) und des hydrophilen Polyacetals (B) werden hydrophile Blockcopolyacetale erzeugt, die geringe Mengen hydrophober Bausteine enthalten. Bei genügend hohem Molekulargewicht besitzen diese Blockcopolymerisate Verdickereigenschaften.

(4) Aus 4 mol Hexandiol und 2 mol Bis(Hydroxymethyl)-cyclohexandivinylether werden 2 mol eines Polyacetals A mit 3 Monomereinheiten und endständigen OH-Gruppen erhalten.

Aus 4 mol Triethylenglykoldivinylether und 3 mol Triethylenglykol wird ein hydrophiles Polyacetal B hergestellt, das 7 Monomereinheiten aufweist, die über Acyetaldehydacetaleinheiten verbunden sind. Das hydrophile Polyacetal B hat endständige Vinylethergruppen.

Durch Umsetzung des hydrophoben Polyacetals A mit dem hydrophilen Polyacetal B entsteht ein Blockcopolyacetal aus 7 hydrophilen Monomereinheiten, an das an beiden Seiten hydrophobe Blöcke zu je 3 Monomereinheiten addiert worden sind. Durchschnittlich besteht das Blockcopolyacetal aus 13 Monomereinheiten, wobei endständig hydrophobe Strukturen und in der Mitte hydrophile Strukturelemente vorherrschen. Dieses Blockcopolyacetal hat OH-Endgruppen.

Durch Veränderung der Einsatzmengen ist es möglich, die Eigenschaften der Blockcopolyacetale gegenüber Lösemitteln, insbesondere gegenüber Wasser zu beeinflussen. Auf diese Weise lassen sich beispielsweise die im folgenden beschriebenen Blockstrukturen erzeugen:

I = hydrophiler Block, kann sowohl OH als auch Vinylethergruppen als Endgruppen tragen
O = hydrophober Block, kann sowohl OH als auch Vinylethergruppen als Endgruppen tragen

I-O-I
O-I-O
I-O-I-O-I
O-I-O-I-O-I-O-I-O

I-O-I-O-I-O-I-O-I-O-I-O-I-O-I-O-I

Es ist auch möglich einen hydrophilen Block $I_1$ mit endständigen OH-Gruppen beidseitig mit einem hydrophilen Block $I_2$ mit endständigen Vinylethergruppen umzusetzen. Es entstehen dann hydrophile Strukturen:

$$I_2\text{-}I_1\text{-}I_2$$

die beidseitig Vinylethergruppen besitzen. An diesen hydrophilen Block, der aus 2 verschiedenen hydrophilen Blöcken aufgebaut ist, können weitere hydrophile Makromere $I_3$, die endständig OH-Gruppen tragen, angelagert werden:

$$I_3\text{-}I_2\text{-}I_1\text{-}I_2\text{-}I_3$$

Das Polyacetal aus 3 verschiedenen hydrophilen Blöcken ($I_1$, $I_2$, $I_3$) besitzt an den Enden OH Gruppen, die mit hydrophoben Blöcken O mit endständigen Vinylethergruppen umgesetzt werden können:

$$O\text{-}I_3\text{-}I_2\text{-}I_1\text{-}I_2\text{-}I_3\text{-}O$$

Das Blockcopolyacetal besitzt einen hydrophilen Kern aus 3 verschiedenen Blöcken $I_1$, $I_2$, $I_3$ und hydrophoben Enden O. Durch die vielfältigen Variationsmöglichkeiten sind die Kombinationsmöglichkeiten nahezu unbegrenzt.

Die Eigenschaften der Blockcopolyacetale können durch die Reihenfolge, in der die Polyacetale (A) und (B) miteinander umgesetzt werden, variiert werden. Betrachtet man als Beispiel hierfür die Umsetzung von Polyacetalen aus (A) mit Polyacetalen (B) in einem solchen Verhältnis, daß die Polyacetale A 2 mol-OH-Endgruppen und die Polyacetale (B) 1 mol Vinyletherendgruppen aufweisen, so entstehen durch Zugabe von (A) zu (B) zu Beginn der Reaktion, d.h. so lange noch Vinylethergruppen vorhanden sind, Polymere mit der Reihenfolge B-A-B mit beidseitig endständigen Vinylethergruppen. Mit fortschreitender Zugabe von A nimmt der Gehalt an Polyacetalen B in der Reaktionsmischung ab und die Reaktion von den Divinyletherblöcken B-A-B mit dem Polyacetal A nimmt zu. Es bilden sich zunehmend Blöcke mit der Reihenfolge B-A-B-A-B-A-B. Ist die Hälfte der Menge an Polyacetal A zudosiert, so liegen die OH-Gruppen und Vinylethergruppen äquimolar vor. Dabei bilden sich Blöcke mit hohem Molekulargewicht. Die 2. Hälfte der Menge an A bleibt ungenutzt. In der resultierenden Reaktionsmischung sind also Blöcke mit den Einheiten $(A\text{-}B)_n$ und A enthalten.

Wird jedoch das Polyacetal B zu dem Polyacetal A zudosiert, so liegen - zumindest zu Beginn der Zugabe von Polyacetal B - OH-Gruppen im Überschuß vor. Es bilden sich dann Blöcke aus A-B-A, die beidseitig OH-Gruppen tragen und neben unverändertem Polyacetal A in der Reaktionsmischung enthalten sind. Erst gegen Ende der Zugabe verarmt die Reaktionsmischung an Polyacetal A und die Reaktion von A-B-A-Blöcken mit Polyacetal B wird merklich zunehmen.

Die Reihenfolge der Vereinigung der Blöcke kann beliebig erfolgen. Durch Variation der Reihenfolge der Zugabe der Polyacetale A und B zum Reaktionsgemisch können die Eigenschaften der entstehenden Blockpolyacetale gezielt eingestellt werden. So lassen sich beispielsweise Polymertenside erzeugen.

Die Blockcopolyacetale werden bei pH-Werten unterhalb von 7 in Acetaldehyd und Diole hydrolysiert. Löst man die Blockcopolyacetale in Wasser, das mit Kohlendioxid gesättigt ist, so werden die darin gelösten Blockcopolyacetale innerhalb von 4 Wochen praktisch quantitativ gespalten. Bei einem pH-Wert von 2 ist die Hydrolyse der Blockcopolyacetale in wässrigen Medien innerhalb weniger Minuten beendet. Die Blockcopolymerisate können auch durch gezielte saure Hydrolyse abgebaut werden, um spezielle Eigenschaften zu erzeugen. Außerdem ist es beispielsweise möglich, Estergruppen enthaltende Blockcopolyacetale einer alkalischen Hydrolyse in wässrigem Medium zu unterwerfen, um die Estergruppen der Blockcopolyacetale in Carboxylatgruppen umzuwandeln. Die Blockcopolymerisate haben beispielsweise K-Werte in dem Bereich von 9 bis 100 (bestimmt nach H. Fikentscher in Wasser bei pH 8 bei 25°C und einer Polymerkonzentration von einem Gewichtsprozent). Das Molekulargewicht der Blockcopolymerisate (bestimmt durch viskosimetrische Messungen an wäßrigen Lösungen mit Polyethylenglykolen als Standard) beträgt vorzugsweise 300 bis 150.000. Die Blockcopolymerisate bzw. ihre Hydrolyseprodukte sind biologisch leicht abbaubar.

Die Blockpolyacetale werden als Zusatz zu pulverförmigen oder flüssigen phosphatarmen und phosphatfreien Wasch- und Reinigungsmitteln verwendet. Sie eignen sich außerdem als schaumarme Tenside in Geschirrspülmitteln. Die Einsatzmengen in Wasch- und Reinigungsmitteln an Blockcopolyacetalen liegen üblicherweise in dem Bereich von 0,5-20, vorzugsweise 2 bis 10, in Geschirrspülmitteln, maschinellen Reinigern 0,1 bis 40 Gew.-%.

Unter phosphatarmen Wasch- und Reinigungsmitteln sollen solche Formulierungen verstanden werden, die weniger als 25 Gew.-% an Phosphat, berechnet als Pentanatriumtriphosphat, enthalten. Die Zusammensetzung von pulverförmigen Waschmittelformulierungen kann sehr unterschiedlich sein. Phosphatfreie Waschmittelformulierungen,

besonders konzentrierte, pulverförmige Kompaktwaschmittel können neben den üblichen Tensidanteilen als Builder Zeolith und/ oder Schichtsilikate in Form kristalliner oder amorpher pulverförmiger hydratisierter Natronwassergläser enthalten. Silikate dieser Art sind bekannt, vgl. EP-B-0164514 und EP-A-0444415. Gleiches gilt für die Zusammensetzung von Reinigungsmittelformulierungen. Wasch- und Reinigungsmittelformulierungen enthalten üblicherweise Tenside in Mengen von 1 bis 50 Gew.-%, in einigen Fällen sogar noch höhere Mengen an Tensid, und gegebenenfalls Builder. Diese Angaben gelten sowohl für flüssige als auch für pulverförmige Wasch- und Reinigungsmittelformulierungen. Beispiele für die Zusammensetzung von Waschformulierungen, die in Europa, in den USA und in Japan gebräuchlich sind, findet man beispielsweise in Chemical und Engn. News, Band 67, 35 (1989) tabellarisch dargestellt sowie in Ullmanns Encyklopädie der technischen Chemie, Verlag Chemie, Weinheim 1983, 4. Auflage, Seiten 63-160. Weitere Angaben über die Zusammensetzung vor Wasch- und Reinigungsmitteln können der WO-A-90/13581 entnommen werden.

Die erfindungsgemäß in Wasch- und Reinigungsmitteln zu verwendenden Blockcopolyacetale verbessern das Primärwaschvermögen von phosphatarmen und phosphatfreien Wasch- und Reinigungsmitteln, können problemlos in diese Formulierungen eingearbeitet werden, erniedrigen die Viskosität wasserhaltiger Tenside und ergeben stabile, homogene Wasch- und Reinigungsmittelformulierungen.

Aufgrund der viskositätserniedrigenden Wirkung sind die erfindungsgemäß zu verwendenden Blockcopolyacetale wichtige Hilfsmittel bei der Herstellung phosphatreduzierter und phosphatfreier Wasch- und Reinigungsmittel. Durch die Verwendung dieser Hilfsmittel gelingt es, die Slurry-Konzentration im Crutcher auf mindestens 80 % anzuheben. Dies bedeutet eine bessere Wirtschaftlichkeit durch günstigere Auslastung des Sprühturmes sowie eine Einsparung an Energie, weil weniger Wasser verdampft werden muß. Ebenso sind die erfindungsgemäßen Blockcopolyacetale und Copolymere überall dort vorteilhaft einzusetzen, wo bei der Herstellung von Mischungen eine Gelphase durchlaufen wird, die wegen ihrer hohen Viskosität Störungen verursacht.

Die Blockcopolyacetale können außerdem als Emulgatoren und Schutzkolloide zur Herstellung von Dispersionen verwendet werden. Sie sind auch geeignet zur Verwendung als polymere Weichmacher in Werkstoffen wie Polyvinylchlorid oder Polystyrol. Die Blockcopolyacetale können auch als fließfähige Diolkomponenten zur Herstellung von Polyurethanen verwendet werden. Eine bevorzugte Anwendung der Blockcopolyacetale besteht in ihrem Einsatz als schaumarme Tenside in Geschirrspülmitteln und in der Flaschenwäsche, d.h sie werden sowohl bei der Reinigung von Textilien als auch bei der Reinigung harter Oberflächen verwendet. Die Blockcopolymerisate sind gegenüber alkalischen Inhaltsstoffen von Formulierungen stabil und können aufgrund von Klebeeigenschaften auch als wasserlösliche Kleber- bzw. Rohstoffe für die Herstellung wasserlöslicher Kleber verwendet werden.

Die Prozentangaben in den Beispielen sind - sofern nichts anderes angegeben ist, Gewichtsprozent. Die K-Werte wurden nach H. Fikentscher, Cellulose-Chemie, Band 13, 58 - 64 und 71 - 74 (1932) in 1-Gew.-%iger Lösung in Wasser bei pH 8 bei 25°C bestimmt.

In den Beispielen werden folgende Abkürzungen verwendet.

O bedeutet einen hydrophoben Block, der sowohl OH-oder Vinyletherendgruppen tragen kann

I steht für einen hydrophilen Block eines Acetaldehydeinheiten enthaltenden Polyacetals, das sowohl OH als auch Vinylethergruppen tragen kann.

Beispiel 1

Blockcopolyacetal 1 - Herstellung eines Blockcopolyacetals vom Typ O-I-O mit Vinyletherendgruppen

Das Polyacetal A ist ein hydrophiler Block I und wird dadurch hergestellt, daß man in einem 500 ml fassenden Rundkolben 0,4 g Oxalsäure in 0,7 mol (105 g) Triethylenglykol bei einer Temperatur von 110°C löst und innerhalb von 2 Stunden mit 0,6 mol (94,8 g) Diethylenglykolvinylether kontinuierlich versetzt. Das Reaktionsgemisch wird weitere 30 Minuten bei einer Temperatur von 110°C gehalten und danach eine Probe entnommen, um den Restgehalt an Vinylethergruppen jodometrisch zu bestimmen. Er betrug 0,003 mol Vinylethergruppen. Die OH-Zahl des Polyacetals A ist 68 (berechnet 56). Das Polyacetal ist ein fließfähiges Harz vom K-Wert 15,1.

Herstellung des Polyacetals B als hydrophobem Block O:

In einem 500 ml fassenden Rundkolben werden 0,2 g Oxalsäure in 0,6 mol (85,2 g 1,4-Butandioldivinylether bei einer Temperatur von 110°C gelöst und innerhalb von 60 Minuten mit 0,4 mol (47,2 g) 1,6-Hexandiol versetzt. Das Reaktionsgemisch wird noch 30 Minuten bei 110°C gerührt. Danach wird eine Probe entnommen, um den Gehalt an Vinylethergruppen zu bestimmen. Man findet 0,38 mol Vinylethergruppen (berechnet 0,4 mol).

Zur Herstellung eines erfindungsgemäßen Blockcopolyacetals gibt man das oben beschriebene Blockcopolymerisat A direkt im Anschluß an die Herstellung innerhalb von 2 Stunden zu dem Polyacetal B und führt die Reaktion bei

einer Temperatur von 110°C durch. Nach Beendigung der Zugaben des Polyacetals A hält man das Reaktionsgemisch noch 40 Minuten bei einer Temperatur von 110°C. Der an einer Probe jodometrisch bestimmte Vinylethergehalt beträgt 0,12 mol Vinylethergruppen. Das Blockcopolymerisat hat einen K-Wert von 20,2.

Beispiel 2

Blockcopolyacetal 2

Dieses Blockcopolyacetal ist ein Copolymer des Typs $(O\text{-}I)_n$.

Das Polyacetal A bildet den hydrophilen Block I des Blockcopolyacetals. Es wird nach der im Beispiel 1 für die Herstellung des Polyacetals A angegebenen Verfahrensweise hergestellt.

Das Polyacetal B ist ein hydrophober Block O, der dadurch erhalten wird, daß man in einem 500 ml fassenden Rundkolben 0,2 g Oxalsäure in 0,3 mol (42,6 g) 1,4 Butandioldivinylether bei einer Temperatur von 110°C löst und die Mischung innerhalb von 60 Minuten kontinuierlich mit 0,2 mol (23,6 g) 1,6-Hexandiol versetzt. Nach Beendigung der Hexandiolzugabe wird das Reaktionsgemisch noch 30 Minuten bei einer Temperatur von 110°C gerührt. Die Analyse einer Probe ergibt 0,11 mol Vinylethergruppen (berechnet 0,10 mol).

Zur Herstellung von Blockcopolyacetalen wird das im Beispiel 1 beschriebene Polyacetal A, das eine Temperatur von 110°C hat, innerhalb von 2 Stunden kontinuierlich zu dem oben beschriebenen Polyacetal B zudosiert. Nach Beendigung der Zugabe wird das Reaktionsgemisch noch 40 Minuten auf eine Temperatur von 110°C erhitzt. Nach dieser Zeit beträgt der Gehalt an Vinylethergruppen 0,001 mol. Das entstandene Blockcopolymerisat hat einen K-Wert von 25,7.

Beispiel 3

Blockcopolymerisat 3 des Typs O-I-O mit OH-Endgruppen

Man stellt ein Polyacetal A her, das den hydrophoben Block O des Blockcopolymerisats bildet. Hierzu werden in einem 250 ml fassenden Rundkolben 0,3 g Oxalsäure in 0,3 mol (43,2 g) Bis(Hydroxymethyl)cyclohexan bei einer Temperatur von 110°C gelöst und innerhalb von 60 Minuten kontinuierlich mit 0,2 mol (56 g) 1,4-Butandioldivinylether versetzt. Das Reaktionsgemisch wird danach noch 30 Minuten auf 110°C erhitzt. Es hat einen Vinylethergruppengehalt von 0,001 mol. Die OH-Zahl beträgt 65 (berechnet 72) und der K-Wert ist 10,9.

Das Polyacetal B, das als hydrophiler Block I Bestandteil des Blockcopolymerisates werden soll, wird dadurch hergestellt, daß man in einem 250 ml fassenden Rundkolben 0,5 g Oxalsäure in 0,55 mol (86,9 g) Diethylenglykoldivinylether bei einer Temperatur von 110°C löst und innerhalb von 2 Stunden 0,5 mol (75g) Triethylenglykol kontinuierlich zudosiert. Nach der Zugabe des Triethylenglykols wird das Reaktionsgemisch noch 30 Minuten bei einer Temperatur von 110°C gerührt. Danach beträgt der jodometrisch ermittelte Gehalt an Vinylethergruppen 0,08 mol (berechnet 0,1 mol).

Das Polyacetal B ist ein fließfähiges Harz. Es hat einen K-wert von 11,3.

Zur Herstellung eines Blockcopolyacetals wird das Polyacetal B, das eine Temperatur von 110°C hat, innerhalb von 2 Stunden zu dem Polyacetal A bei einer Temperatur von 110°C kontinuierlich zudosiert. Nach der Zugabe des Polyacetals B wird das Reaktionsgemisch noch 40 Minuten bei einer Temperatur von 110°C gerührt. Danach wird der Vinylethergehalt des entstandenen Blockcopolymerisats jodometrisch bestimmt. Er beträgt 0,003 mol Vinylethergruppen (berechnet 0 mol). Die OH-Zahl des Blockcopolymerisats beträgt 32 (berechnet 28) und K-Wert 16,0.

Beispiel 4

Blockcopolymerisat 4

Dieses Blockcopolymerisat entspricht dem Typ I-O-I-O-I und hat OH-Endgruppen. Das Polyacetal A, das den hydrophilen Block I des Blockcopolymerisats bildet, wird dadurch hergestellt, daß man in einem 1000 ml fassenden Rundkolben 2 g Oxalsäure in 2,7 mol (405 g) Triethylenglykol bei einer Temperatur von 110°C löst und dazu innerhalb von 3 Stunden 2,4 mol (380 g) Diethylenglykolvinylether kontinuierlich zudosiert. Nach der Zugabe des Divinylethers wird das Reaktionsgemisch noch weitere 30 Minuten bei einer Temperatur von 110°C gerührt. Das so erhältliche Polyacetal A hat einen Gehalt 0,005 mol Vinylethergruppen und eine OH-Zahl von 55 (berechnet 43). Der K-Wert des Polyacetals A beträgt 12,5.

Das Polyacetal B, das den hydrophoben Block O des Blockcopolyacetals bildet, wird hergestellt, indem man in einem 500 ml fassenden Rundkolben 0,5 g Oxalsäure in 1,2 mol (170,4 g) 1,4-Butandivinylether bei einer Temperatur von 110°C löst und dazu innerhalb von 60 Minuten 1,0 mol (118 g) 1,6 Hexandiol zudosiert. Nach Beendigung der

Hexandiolzugabe wird das Reaktionsgemisch 30 Minuten auf eine Temperatur von 110°C erhitzt. Danach beträgt der Gehalt an Vinylethergruppen 0,37 mol (berechnet 0,4 mol). Das Polyacetal B hat einen K-Wert 16,3.

Zur Herstellung eines Blockcopolyacetals des oben angebenen Typs wird das Polyacetal B, das eine Temperatur von 110°C hat, innerhalb von 2 Stunden zu dem auf eine Temperatur von 110°C erwärmten Polyacetal kontinuierlich zudosiert und umgesetzt. Nach Beendigung der Zugabe des Polyacetals B wird das Reaktionsgemisch noch 40 Minuten bei einer Temperatur von 110°C gerührt. Die bei der Herstellung der Polyacetale A und B verwendete Oxalsäure reicht aus, um die Herstellung der Blockcopolyacetale aus den Polyacetalen A und B zu katalysieren. Das so erhältliche Blockcopolyacetal hat einen Vinylethergruppengehalt von 0,002 mol und eine OH-Zahl von 15 (berechnet 10). Der K-Wert des Blockcopolyacetals beträgt 23,0.

Beispiel 5

Blockcopolyacetal 5

1 Dieses Blockcopolyacetal entspricht dem Typ O-$I^1$-I-$I^1$-O mit OH-Gruppen.

Herstellung des Polyacetals A, das den Block I des Blockcopolymerisats bildet.

In einem 500 ml fassenden Rundkolben werden 0,4 Oxalsäure in 0,3 mol (90 g) Polyethylenglykol vom Molekulargewicht 300 bei einer Temperatur von 110°C gelöst und innerhalb von 2 Stunden kontinuierlich mit 0,2 mol (31,6 g) Diethylenglykoldivinylether versetzt. Nach der Zugabe des Divinylethers wird das Reaktionsgemisch noch 30 Minuten bei einer Temperatur von 110°C gerührt und eine Probe entnommen. Die Analyse der Probe ergibt 0,18 mol Vinylethergruppen (berechnet 0,2 mol) und eine OH-Zahl von 112 (berechnet 92). Der K-Wert des Polyacetals A beträgt 9,1.

Herstellung des Polyacetals B, das den hydrophilen Block $I^1$ bildet.

In einem 500 ml fassenden Rundkolben werden 0,4 g Oxalsäure in 0,6 mol (130,8 g) Triethylenglykoldivinylether gelöst und innerhalb von 60 Minuten mit 0,4 mol (82,4 g) Weinsäurediethylester versetzt. Nach der Zugabe des Weinsäureesters rührt man das Reaktionsgemisch noch 45 Minuten bei einer Temperatur von 110°C und entnimmt ihm anschließend eine Probe, die analysiert wird. Man findet jodometrisch 0,37 mol Vinylethergruppen (berechnet 0,4 mol). Das Polyacetal B hat einen K-Wert von 10,3.

Herstellung des Polyacetals A 1, das den hydrophoben Block O des Blockcopolyacetals bildet.

In einem 500 ml fassenden Rundkolben werden 0,4 g Oxalsäure in 0,8 mol (114 g) 1,4-Butandioldivinylether bei einer Temperatur von 110°C gelöst und innerhalb von 60 Minuten mit 1,0 Mol (118 g) 1,6-Hexandiol bei dieser Temperatur kontinuierlich versetzt. Das Reaktionsgemisch wird danach noch 30 Minuten bei 110°C gerührt. Anhand einer dem Reaktionsgemisch entnommenen Probe wird der Vinylethergruppengehalt jodometrisch zu 0,006 Mol bestimmt. Die OH-Zahl beträgt 96 (berechnet 90). Das Polyacetal A 1 hat einen K-Wert von 13,5.

Um das Blockcopolyacetal des oben angegebenen Typs herzustellen, wird das Polyacetal A, das eine Temperatur von 110°C hat, kontinuierlich innerhalb von 2 Stunden zu dem Polyacetal B zudosiert, das ebenfalls eine Temperatur von 110°C aufweist. Die Reaktion wird bei der genannten Temperatur durchgeführt. Das Reaktionsgemisch wird 60 Minuten bei 110°C gerührt. Danach beträgt der Vinylethergruppengehalt 0,18 mol (berechnet 0,2 mol). Das so erhaltene Blockcopolyacetal wird dann zu dem auf eine Temperatur von 110°C erwärmten Polyacetal A1 innerhalb von 2 Stunden kontinuierlich zudosiert und danach noch 30 Minuten auf 110°C erwärmt. Danach beträgt der Vinylethergehalt des Blockcopolyacetals 0,008 mol, die OH-Zahl beträgt 18 (berechnet 19).

Durch anschließende alkalische Behandlung des so hergestellten Blockcopolyacetals mit 0,4 mol Natronlauge werden Teile der Estergruppen, die mit dem Polyacetal B in das Blockcopolyacetal eingebaut wurden, hydrolysiert und in die Natriumsalzform überführt. Der K-Wert des Polymers in der Na-Form beträgt 14,7.

Anwendungstechnischer Teil

Die oben beschriebenen Blockcopolyacetale werden als Zusatz zu Wasch- und Reinigungsmitteln getestet. In den folgenden Beispielen wird der Einfluß der Blockcopolyacetale auf die Primärwaschwirkung und Vergrauung demonstriert. Um die Vergrauungsneigung zu bestimmen, wäscht man Standardschmutzgewebe zusammen mit weißem Testgewebe mehrfach und erneuert das Schmutzgewebe nach jeder Wäsche. Der von dem Schmutzgewebe abgelöste Schmutz, der während der Wäsche auf das weiße Testgewebe aufzieht, bewirkt dabei einen Abfall im Weißgrad, der gemessen wird.

Für die Bestimmung der Primärwaschwirkung und der Vergrauung werden folgende Bedingungen eingehalten:

| | |
|---|---|
| Waschgerät | Launder-o-meter |
| Waschtemperatur | 60°C |
| Wasserhärte | 3 mmol Ca/l = 16,8°d Verhältnis Ca:Mg 3:1 |

(fortgesetzt)

| | |
|---|---|
| Waschzeit | 30 min (einschl. Aufheizzeit) |
| Waschzyklen | 4 |
| Waschmitteldosierung | 6 g/l |
| Flottenverhältnis | 1:14,3 |

Gewebe

Weißgewebe: Baumwolle/Polyester-Gewebe Polyester-Gewebe

Schmutzgewebe: WKF 20 D (Wäschereiforschung Krefeld) (wird nach jeder Wäsche erneuert)

Weißgradmessung mit Elrepho 2000 der Firma Datacolor in % Remission
Weißgrad der ungewaschenen Gewebe:

| | |
|---|---|
| Baumwolle/Polyester | 80,1 |
| Polyester | 78,0 |
| WFK 20 D | 38,0 |

Angegeben sind jeweils die Weißgraddifferenzen auf den einzelnen Geweben vor und nach der Wäsche. Je größer die Weißgraddifferenz auf dem Schmutzgewebe WFK 20 D ist, um so höher ist die Primärwaschwirkung. Je kleiner die Differenzen auf den Weißgeweben, um so besser ist die Vergrauungsinhibierung.

Zum Vergleich wurde eine Waschmittelformulierung getestet, die kein Blockcopolyacetal enthält.

Formulierung A:

| | |
|---|---|
| 10 % | Natriumdodecylbenzolsulfonat, 50 %ig in Wasser |
| 3 % | des Reaktionsproduktes aus 1 mol $C_{13}/C_{15}$-Oxoalkohol und 7 mol Ethylenoxid (Tensid A) |
| 2 % | Polypropylenglykol der Molmasse 600 |
| 77 % | Wasser |
| 8 % | Blockcopolyacetal nach einem der Beispiele 1 bis 5 |

Die bezüglich der Vergrauung und der Primärwaschwirkung bei Einsatz der erfindungsgemäß zu verwendenden Blockcopolyacetale erzielten Effekte sind in der Tabelle angegeben.

Tabelle

| Beispiel | Zusatz von Blockcopolyacetal | Primärwaschwirkung | Vergrauung | |
|---|---|---|---|---|
| | nach Beispiel Nr. | WFK 20 D | Polyester | PES/Baumwolle |
| 6 | 1 | 22,6 | 7,9 | 13,0 |
| 7 | 2 | 22,6 | 7,0 | 11,6 |
| 8 | 3 | 23,0 | 7,5 | 11,3 |
| 9 | 4 | 22,0 | 8,1 | 12,2 |
| 10 | 5 | 23,5 | 8,6 | 11,8 |
| Vergleichsbeispiel | ohne | 17,5 | 9,3 | 13,5 |

Wie aus der Tabelle zu entnehmen ist, verbessern die erfindungsgemäßen Blockcopolyacetale die Primärwaschwirkung der Formulierung deutlich. Gleichzeitig wird auch eine Verbesserung der Vergrauungsinhibierung beobachtet. Dabei ist zu berücksichtigen, daß aufgrund der durch die erfindungsgemäß zu verwendenden Blockcopolyacetale erheblich verbesserten Primärwaschwirkung höhere Schmutzkonzentrationen in der Waschflotte vorliegen und damit

höhere Schmutzmengen zum Wiederaufziehen zur Verfügung stehen. Alle gemäß der Erfindung zu verwendenden Polymeren waren ohne Probleme in die Waschmittelformulierung einarbeitbar und führten zu homogenen, stabilen Lösungen.

## Patentansprüche

1. Blockcopolyacetale, dadurch gekennzeichnet, daß sie erhältlich sind durch kationisch initiierte Polyaddition von

   (A) Acetaldehydacetaleinheiten enthaltenden Polyacetalen mit mindestens 2 OH-Gruppen im Molekül und

   (B) Acetaldehydacetaleinheiten enthaltenden Polyacetalen mit mindestens 2 Vinylethergruppen im Molekül,

   wobei die aus den Polyacetalen A und B enhältlichen Blöcke unterschiedlich sind und das Molverhältnis der OH-Gruppen in den Polyacetalen (A) zu den Vinylethergruppen in den Polyacetalen (B) 2:1 bis 1:2 beträgt.

2. Verfahren zur Herstellung von Blockcopolyacetalen, dadurch gekennzeichnet, daß man

   (A) Acetaldehydacetaleinheiten enthaltende Polyacetale mit mindestens 2 OH-Gruppen im Molekül und

   (B) Acetaldehydacetaleinheiten enthaltende Polyacetale mit mindestens 2 Vinylethergruppen im Molekül

   im Molverhältnis der OH-Gruppen in den Polyacetalen (A) zu den Vinylethergruppen in den Polyacetalen (B) von 2:1 bis 1:2 einer kationisch initiierten Polyaddition unterwirft wobei die aus den Polyacetalen A und B enhältlichen Blöcke unterschiedlich sind.

3. Verwendung der Blockcopolyacetale nach Anspruch 1 als Zusatz zu phosphatarmen und phosphatfreien Wasch- und Reinigungsmitteln.

4. Verwendung der Blockcopolymerisate nach Anspruch 1 als schaumarme Tenside in Geschirrspülmitteln.

## Claims

1. Block copolyacetals obtainable by cationically initiated polyaddition of

   (A) polyacetals containing acetaldehyde acetal units and having at least 2 OH groups in the molecule and
   (B) polyacetals containing acetaldehyde acetal units and having at least 2 vinyl ether groups in the molecule,

   the blocks obtainable from the polyacetals A and B being different and the molar ratio of the OH groups in the polyacetals (A) to the vinyl ether groups in the polyacetals (B) being from 2:1 to 1:2.

2. A process for preparing block copolyacetals, which comprises subjecting

   (A) polyacetals containing acetaldehyde acetal units and having at least 2 OH groups in the molecule and
   (B) polyacetals containing acetaldehyde acetal units and having at least 2 vinyl ether groups in the molecule

   to a cationically initiated polyaddition in a molar ratio of the OH groups in the polyacetals (A) to the vinyl ether groups in the polyacetals (B) of from 2:1 to 1:2, the blocks obtainable from the polyacetals A and B being different.

3. The use of the block copolyacetals of claim 1 as additament in reduced-phosphate and phosphate-free laundry detergents and cleaners.

4. The use of block copolymers of claim 1 as low-foam surfactants in dishwashing compositions.

## Revendications

1. Copolyacétals séquencés, caractérisés en ce que l'on peut les obtenir par la polyaddition cationiquement amorcée

   (A) de polyacétals contenant des unités acétaldéhydacétal avec au moins deux groupes OH dans la molécule et
   (B) de polyacétals contenant des unités acétaldéhydacétal avec au moins deux groupes vinyléther dans la molécule,

   où les séquences obtenues à partir des polyacétals A et B sont différentes et le rapport molaire des groupes OH dans les polyacétals (A) aux groupes vinyléther dans les polyacétals (B) varie de 2:1 à 1:2.

2. Procédé de fabrication de copolyacétals séquencés, caractérisé en ce que l'on soumet

   (A) des polyacétals contenant des unités acétaldéhydacétal avec au moins deux groupes OH dans la molécule et
   (B) des polyacétals contenant des unités acétaldéhydacétal avec au moins deux groupes vinyléther dans la molécule,

   dans le rapport molaire des groupes OH dans les polyacétals (A) aux groupes vinyléther dans les polyacétals (B) de 2:1 à 1:2, à une polyaddition cationiquement amorcée, où les séquences obtenues à partir des polyacétals A et B sont différentes.

3. Utilisation des copolyacétals séquencés selon la revendication 1 comme additifs pour des détergents de lavage et de nettoyage dépourvus de ou pourvus en phosphates.

4. Utilisation des copolyacétals séquencés selon la revendication 1 comme agents tensioactifs ou surfactifs dans des produits de lavage de la vaisselle.